(19) Europäisches Patentamt / European Patent Office / Office européen des brevets

(11) **EP 3 301 779 A1**

(12) **EUROPEAN PATENT APPLICATION**
published in accordance with Art. 153(4) EPC

(43) Date of publication:
04.04.2018 Bulletin 2018/14

(51) Int Cl.:
*H02J 7/00* *(2006.01)*

(21) Application number: 16853056.6

(22) Date of filing: 26.08.2016

(86) International application number:
PCT/CN2016/096810

(87) International publication number:
WO 2017/059751 (13.04.2017 Gazette 2017/15)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 10.10.2015 CN 201510654821

(71) Applicant: Xi'an Tgood Intelligent Charging
Technology Co. Ltd
Xi'an, Shaanxi 710065 (CN)

(72) Inventor: YUAN, Qingmin
Xi'an
Shaanxi 710065 (CN)

(74) Representative: Rössler, Matthias
KNH Patentanwälte Kahlhöfer Neumann
Rößler Heine PartG mbB
Postfach 10 33 63
40024 Düsseldorf (DE)

(54) **FLEXIBLE GROUPING AND CURRENT-EQUALIZING METHOD FOR CHARGER SYSTEM OF SHARED BUS**

(57) An object of the present invention is to provide a flexible-grouping current sharing method for a bus sharing charger system. By analyzing information of the charger system (including a power distribution unit (PDU) and a charging module), a charging control unit (CCU) automatically distributes a certain amount of PDU and charging modules for serving as a specific charging group to achieve charging operation to a charging object (battery). During the process, each of the charging modules in the groups automatically achieves within-group current sharing by data filtering, and out-group module is not involved in the current sharing. When the capacity or quantity of the charging objects (battery) changes, the system distributes one or more specific charging group again to achieve charging operation on different charging objects (battery) simultaneously or with time interval.

Fig. 1

## Description

BACKGROUND OF THE PRESENT INVENTION

### Field of Invention

The present invention relates to the field of the power electronics control technique, and more particularly to a flexible-grouping current sharing method for bus sharing charger system.

### Description of Related Arts

Currently, the conventional charger system usually adopts equalized charging or alternate charging to achieve charging the objects (battery). Under the premise of without increasing the structure complexity of the hardware in the system, the technique is not capable of independently and flexibly configuring the charger module to finish the charging operation, which often causes a result that the charging manner of the charger system is inflexible and the overall utilization rate of the charger is low.

SUMMARY OF THE PRESENT INVENTION

An object of the present invention is to provide a flexible-grouping current sharing method for a bus sharing charger system. By analyzing information of the charger system (including a power distribution unit (PDU) and a charging module), a charging control unit (CCU) automatically distributes a certain amount of PDU and charging modules for serving as a specific charging group to achieve charging operation to a charging object (battery). During the process, each of the charging modules in the groups automatically achieves within-group current sharing by data filtering, and out-group charging module is not involved in the current sharing. When the capacity or quantity of the charging object (battery) changes, the system distributes one or more specific charging group again to achieve charging operation on different charging objects (battery) simultaneously or with time interval, which solves the problems in the conventional charger technique of being not capable of automatically and flexibly distributing charging modules according to the conditions and real-time requirements of the system.

The object of the present invention is implemented by the following technical solutions.

A flexible-grouping current sharing method for bus sharing charger system, comprising steps for group distribution of a specific charging combination of:

Step (1) judging whether a group distribution prophase address sequencing command is triggered by a charging module;

Step (2) starting performing group distribution after the group distribution prophase address sequencing command is triggered;

Step (3) initializing group distribution information on a power distribution unit (PDU) inside a charging module; wherein a bus sharing charging module and the PDU on a system are both deemed as an identical group;

Step (4) executing an address sequencing command by all charging modules on a CAN bus; sequencing address numbers of all the charging modules determined on a basis of a single production date, production quantity and production site on a bar code; uploading a complete symbol to a charging control unit CCU by all the charging modules after completing;

step (5) judging whether the charging control unit (CCU) sends a group distribution command to the power distribution unit (PDU), if yes, continuing the step (5); if no, jumping to a step (12);

step (6) receiving and analyzing a group distribution data frame of the PDU issued by the CCU by each of the charging modules, understanding which PDU combination to join; and modifying group distribution information in current sharing frames to be sent;

step (7) sending and broadcasting the current sharing frames by each one of all the charging modules; filtering out-group current sharing data according to the group distribution information in the current sharing frames; refreshing a new charging module address table in groups according to the address numbers in the step (4) to obtain address numbers of each group of main charging modules;

step (8) refreshing a group distribution status symbol of current share regulating frame each group of the main charging modules to be OK; refreshing a group distribution status of the data frame to be OK after received by the charging modules, meanwhile, updating a CCU group distribution complete symbol by the charging modules;

step (9) inquiring group distribution status of the PDU uploaded via each group of the charging modules by a CCU; wherein if the group distribution status is in accordance with a group distribution object of the PDU, the CCU allows each specific charging group to start up to work;

step (10) regularly sending the current share regulating frame by each group of the main charging modules to regulate share current of the modules in groups, and emptying current sharing data information in a present group;

step (11) after receiving current sharing frames in each group by the charging modules, refreshing current sharing data of a corresponding charging module; wherein out charging module current sharing data which is filtered stays out of current sharing in a current group;

step (12) implementing within-group current sharing among each charging groups; and completing charging operation of different charging battery.

Furthermore, the step (1) judging whether the group distribution prophase address sequencing command is triggered by the charging module comprises two ways; wherein a first way is giving tacit consent to a triggering address sequencing condition; a second way is to initiatively send a command of the triggering address sequencing condition by a CCU.

Furthermore, in the step (4) of sequencing address numbers of all the charging modules determined on a basis of a single production date, production quantity and production site on a bar code; the address numbers is sequenced according to 1 2, 3······N.

Furthermore, in the step (7) the main charging modules are a maximum address or a minimum address, or a specific address in address sequences.

Furthermore, in the step (12) of implementing within-group current sharing among each charging groups comprises steps of:

step (I) starting implementing a function of within-group current sharing;

step (II) judging whether the charging modules are in a normal output status and allow within-group current sharing and press regulating, if yes, continuing the step (III); if no, skipping to the step (X);

step (III) judging whether the current sharing and press regulating of all the charging modules in groups is in a boost status; if yes, continuing a step (IV); if no, skipping to the step (V);

step (IV) outputting a step of current sharing and pressure regulating with a size of d1 by the charging modules in group, continuing to a step (IX);

step (V) judging whether the current sharing and press regulating of all the charging modules in groups is in a decompression status; if yes, continuing a step (VI); if no, skipping to the step (VII);

step (VI) outputting a step of current sharing and pressure regulating with a size of d2 by the charging modules in group, continuing to the step (XI);

step (VII) judging whether the current sharing and press regulating of all the charging modules in groups is in an auto status; if yes, continuing a step (VIII); if no, skipping to the step (XI);

step (VII) judging whether the current sharing and pressure regulating of all the charging modules in groups is in an auto status; if yes, continuing a step (VIII); if no, skipping to the step (XI);

step (XI) outputting a clipping step size of current sharing and press regulating of the charging modules in the groups;

step (X) terminating the current sharing and pressure regulating in the groups.

Furthermore, in the step (VIII), the charging modules in groups outputs a current sharing and pressure regulating step with a size of d3, wherein d3 is a fixed value; or

$$d3=d3+k*(Iave-Io);$$

or

$$d3=func\ (Iave-Io,\ d3');$$

wherein k is a proportional coefficient; func is a discretization expression of a controller; Iave is a within-group average current, Io is an actual current of the charging modules within the groups, d3' is a step size of pressure regulating calculated previously.

Furthermore, the step of implementing within-group current sharing among each charging groups is a repeated recycling process.

Furthermore, comprising the charging control unit (CCU), the power distribution unit (PDU) and a charging module, wherein the CCU, the PDU and the charging module are all connected to a shared CAN bus wire to achieve information interaction; meanwhile, the CCU or the PDU is connected to a BMS rechargeable battery system by the other communication line, so as to achieve information interaction the rechargeable battery.

Furthermore, the other communication line adopts CAN bus or RS485 communication.

Beneficial effects of the present invention are as follows. By a data sharing bus, the charger system is capable of reasonably distributing one or more specific charging group, so as to automatically achieve current sharing function of within-group charging modules in each of the specific charging group, and to achieve charging operation on different charging objects (battery) simultaneously or with time interval. The present invention improves the intelligence and utilization rate and improves input-output ratio of the power module of the charger system on the premise of not increasing the complexity of the structure of the system hardware, and thus the present invention is capable of meeting the over-growing charging demands better in quantity and types in the future.

BRIEF DESCRIPTION OF THE DRAWINGS

Fig. 1 is a flow chart of a powered up charger system which is equipped with a specific charging combination.

Fig. 2 is a flow chart of current sharing of a charging module in a specific charging combination.

DETAILED DESCRIPTION OF THE PREFERRED EMBODIMENT

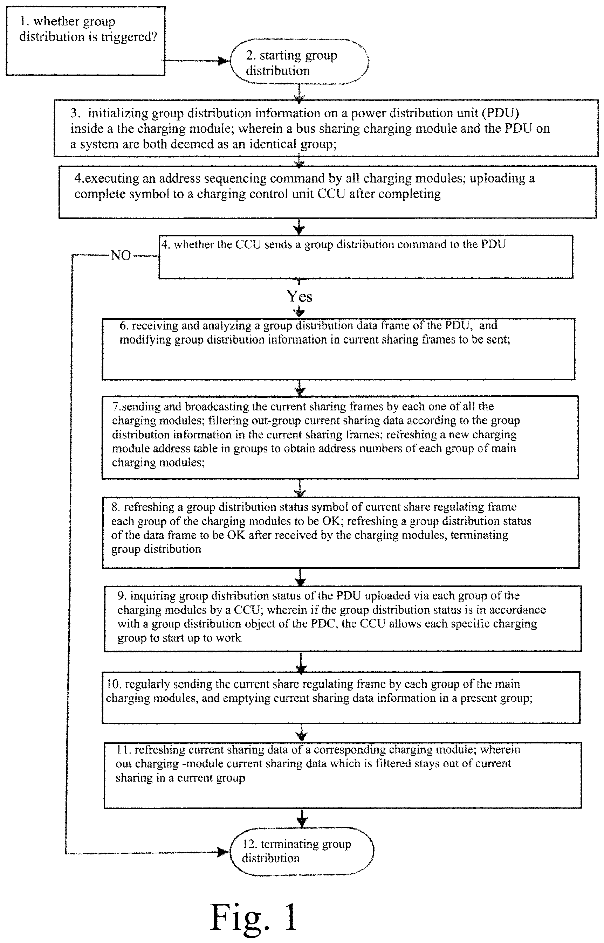

Further description of the present invention is illustrated in detail combining with the accompanying drawings and the preferred embodiments.
Referring to Fig. 1, a flexible-grouping current sharing method for bus sharing charger system, comprising steps for group distribution of a specific charging combination of:

Step (1) judging whether a group distribution prophase address sequencing command is triggered by a charging module, mainly comprising two ways; wherein a first way is giving tacit consent to a triggering address sequencing condition; a second way is to initiatively send a command of the triggering address sequencing condition by a CCU;

Step (2) starting performing group distribution after the group distribution prophase address sequencing command is triggered;

Step (3) initializing group distribution information on a power distribution unit (PDU) inside a charging module; wherein a bus sharing charging module and the PDU on a system are both deemed as an identical group;

Step (4) executing an address sequencing command by all charging modules on a CAN bus; sequencing address numbers of all the charging modules determined on a basis of a single production date, production quantity and production site on a bar code; such as 1, 2, 3······, after finished, uploading a complete symbol to a charging control unit CCU by all the charging modules after completing;

step (5) judging whether the charging control unit (CCU) sends a group distribution command to the power distribution unit (PDU), if yes, continuing the step (5); if no, jumping to a step (12);

step (6) receiving and analyzing a group distribution data frame of the PDU issued by the CCU by each of the charging modules, understanding which PDU combination to join; and modifying group distribution information in current sharing frames to be sent;

step (7) sending and broadcasting the current sharing frames by each one of all the charging modules; filtering out-group current sharing data according to the group distribution information in the current sharing frames; refreshing a new charging module address table in groups according to the address numbers in the step (4) to obtain address numbers of each group of main charging modules, wherein the main charging modules are a maximum address or a minimum address, or a specific address in address sequences;

step (8) refreshing a group distribution status symbol of current share regulating frame each group of the main charging modules to be OK; refreshing a group distribution status of the data frame to be OK after received by the charging modules, meanwhile, updating a CCU group distribution complete symbol by the charging modules;

step (9) inquiring group distribution status of the PDU uploaded via each group of the charging modules by a CCU; wherein if the group distribution status is in accordance with a group distribution object of the PDC, the CCU allows each specific charging group to start up to work;

step (10) regularly sending the current share regulating frame by each group of the main charging modules to regulate share current of the charging modules in groups, and emptying current sharing data information in a present group;

step (11) after receiving current sharing frames in each group by the charging modules, refreshing current sharing data of a corresponding charging module; wherein out charging module current sharing data which is filtered stays out of current sharing in a current group;

step (12) implementing within-group current sharing among each charging groups; and completing charging operation of different charging battery.

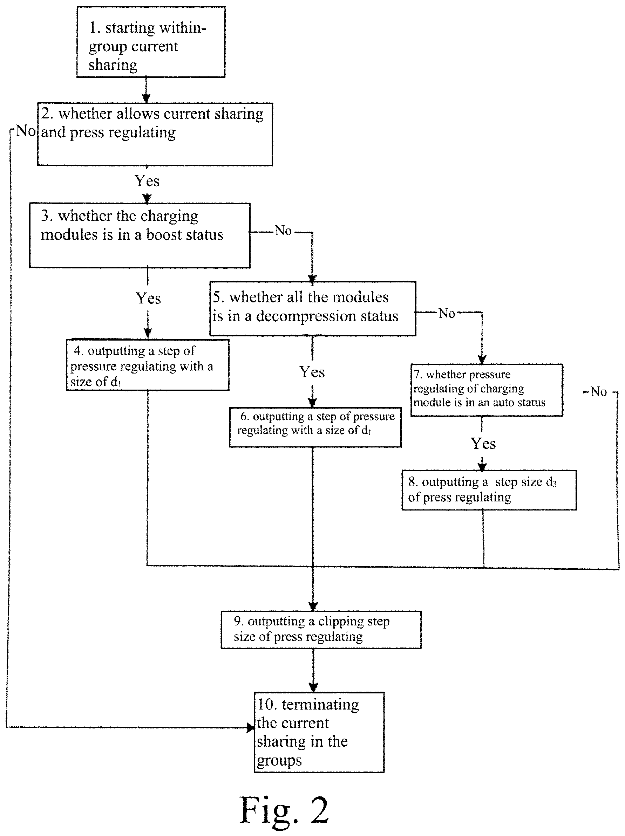

As shown in Fig. 2, which shows an implementing process of within-group current sharing inside each of the charging groups, wherein the process is a repeated recycling process in the step (12) after group distribution of the specific charging combination is determined, wherein the step (12) comprises steps of:

step (I) starting implementing a function of within-group current sharing;

step (II) judging whether the charging modules are in a normal output status and allow within-group current sharing and press regulating, if yes, continuing the step (III); if no, skipping to the step (X);

step (III) judging whether the current sharing and press regulating of all the charging modules in groups is in a boost status; if yes, continuing a step (IV); if no, skipping to the step (V);

step (IV) outputting a step of current sharing and pressure regulating with a size of d1 by the charging modules in group, continuing to a step (IX);

step (V) judging whether the current sharing and press regulating of all the charging modules in groups is in a decompression status; if yes, continuing a step (VI); if no, skipping to the step (VII);

step (VI) outputting a step of current sharing and pressure regulating with a size of d2 by the charging modules in group, continuing to the step (IX);

step (VII) judging whether the current sharing and pressure regulating of all the charging modules in groups is in an auto status; if yes, continuing a step (VIII); if no, skipping to the step (XI);

step (VII) outputting a current sharing and pressure regulating step with a size of d3 by a within-group charging module, wherein d3 is a fixed value; or

$$d3=d3+k*(Iave-Io);$$

or

$$d3=func\ (Iave-Io,\ d3');$$

wherein k is a proportional coefficient; func is a discretization expression of a controller; Iave is a within-group average current, Io is an actual current of the charging modules within the groups, d3' is a step size of pressure regulating calculated previously;

continuing to perform a step (XI).

step (XI) outputting a clipping step size of current sharing and press regulating of the charging modules in the groups;

step (X) terminating the current sharing and pressure regulating in the groups.

By the shared CAN bus and the grouping and filtering mechanism of application data, each functional unit of the charger system is capable of effectively regulating and distributing to flexibly establishing a plurality of specific charging combination, so as to meet the diversity requirements of the charging objects (battery) for time and types.

The charger system comprises the charging control unit (CCU), the power distribution unit (PDU) and a charging module, wherein the CCU, the PDU and the charging module are all connected to a shared CAN bus to achieve information interaction; meanwhile, the CCU or the PDU and is connected to a BMS rechargeable battery system by the other communication line (CAN line or RS485), so as to achieve information interaction the rechargeable battery. The location of the present invention achieves information interaction among the CCU, the PDU and the charging module of the shared CAN bus.

One skilled in the art will understand that the embodiment of the present invention as shown in the drawings and described above is exemplary only and not intended to be limiting.

It will thus be seen that the objects of the present invention have been fully and effectively accomplished. Its embodiments have been shown and described for the purposes of illustrating the functional and structural principles of the present invention and is subject to change without departure from such principles. Therefore, this invention includes all modifications encompassed within the spirit and scope of the following claims.

## Claims

1.  A flexible-grouping current sharing method for a bus sharing charger system, comprising steps for group distribution of a specific charging combination of:

    Step (1) judging whether a group distribution prophase address sequencing command is triggered by a charging module;
    Step (2) starting performing group distribution after the group distribution prophase address sequencing command is triggered;
    Step (3) initializing group distribution information on a power distribution unit (PDU) inside the charging module;
    Step (4) executing an address sequencing command by all charging modules on a CAN bus; sequencing address numbers of all the charging modules determined on a basis of a single production date, production quantity and production site on a bar code; uploading a complete symbol to a charging control unit CCU by all the charging modules after completing;
    step (5) judging whether the charging control unit (CCU) sends a group distribution command to the power distribution unit (PDU), if yes, continuing the step (5); if no, jumping to a step (12); step (6) receiving and analyzing a group distribution data frame of the PDU issued by the CCU by each of the charging modules, understanding which PDU combination to join; and modifying group distribution information in current sharing frames to be sent;

step (7) sending and broadcasting the current sharing frames by each one of all the charging modules; filtering out-group current sharing data according to the group distribution information in the current sharing frames; refreshing a new charging module address table in groups according to the address numbers in the step (4) to obtain address numbers of each group of main charging modules;

step (8) refreshing a group distribution status symbol of current share regulating frame each group of the main charging modules to be OK; refreshing a group distribution status of the data frame to be OK after received by the charging modules, meanwhile, updating a CCU group distribution complete symbol by the charging modules;

step (9) inquiring group distribution status of the PDU uploaded via each group of the charging modules by a CCU; wherein if the group distribution status is in accordance with a group distribution object of the PDC, the CCU allows each specific charging group to start up to work;

step (10) regularly sending the current share regulating frame by each group of the main charging modules to regulate share current of the charging modules in groups, and emptying current sharing data information in a present group;

step (11) after receiving current sharing frames in each group by the charging modules, refreshing current sharing data of a corresponding charging module; wherein out charging module current sharing data which is filtered stays out of current sharing in a current group;

step (12) implementing within-group current sharing among each charging groups; and completing charging operation of different charging battery.

2. The flexible-grouping current sharing method for bus sharing charger system, as recited in claim 1, wherein in the step (1) judging whether the group distribution prophase address sequencing command is triggered by the charging module comprises two ways; wherein a first way is giving tacit consent to a triggering address sequencing condition; a second way is to initiatively send a command of the triggering address sequencing condition by a CCU.

3. The flexible-grouping current sharing method for bus sharing charger system, as recited in claim 1, wherein in the step (4) of sequencing address numbers of all the charging modules determined on a basis of a single production date, production quantity and production site on a bar code; the address numbers is sequenced according to 1 2, 3······N.

4. The flexible-grouping current sharing method for bus sharing charger system, as recited in claim 1, wherein in the step (7) the main charging modules are a maximum address or a minimum address, or a specific address in address sequences.

5. The flexible-grouping current sharing method for bus sharing charger system, as recited in claim 1, wherein in the step (12) of implementing within-group current sharing among each charging groups comprises steps of:

step (I) starting implementing a function of within-group current sharing;
step (II) judging whether the charging modules are in a normal output status and allow within-group current sharing and press regulating, if yes, continuing a step (III); if no, skipping to the step (X);
step (III) judging whether the current sharing and press regulating of all the charging modules in groups is in a boost status; if yes, continuing a step (IV); if no, skipping to the step (V);
step (IV) outputting a step of current sharing and pressure regulating with a size of d1 by the charging modules in group, continuing to a step (IX);
step (V) judging whether the current sharing and press regulating of all the charging modules in groups is in a decompression status; if yes, continuing a step (VI); if no, skipping to the step (VII);
step (VI) outputting a step of current sharing and pressure regulating with a size of d2 by the charging modules in group, continuing to the step (XI);
step (VII) judging whether the current sharing and pressure regulating of all the charging modules in groups is in an auto status; if yes, continuing a step (VIII); if no, skipping to the step (XI);
step (VIII) outputting a step of current sharing and pressure regulating with a size of d3 by the charging modules in group, continuing to the step (XI);
step (XI) outputting a clipping step size of current sharing and press regulating press regulating of the charging modules in the groups;
step (X) terminating the current sharing and pressure regulating in the groups.

**6.** The flexible-grouping current sharing method for bus sharing charger system, as recited in claim 5, wherein in the step (VIII), the charging modules in groups outputs a current sharing and pressure regulating step with a size of d3, wherein d3 is a fixed value; or

$$d3=d3+k*(Iave-Io);$$

or

$$d3=func\ (Iave-Io,\ d3');$$

wherein k is a proportional coefficient; func is a discretization expression of a controller; Iave is a within-group average current, Io is an actual current of the charging modules within the groups, d3' is a step size of pressure regulating calculated previously.

**7.** The flexible-grouping current sharing method for bus sharing charger system, as recited in claim 5, wherein the step of implementing within-group current sharing among each charging groups is a repeated recycling process.

**8.** A bus sharing charger system adopted by the flexible-grouping current sharing method, as recited in claim 1, comprising the charging control unit (CCU), the power distribution unit (PDU) and a charging module, wherein the CCU, the PDU and the charging module are all connected to a shared CAN bus wire to achieve information interaction; meanwhile, the CCU or the PDU is connected to a BMS rechargeable battery system by the other communication line, so as to achieve information interaction the rechargeable battery.

**9.** The system, as recited in claim 8, wherein the other communication line adopts CAN bus or RS485 communication.

```
┌──────────────────────┐
│ 1. whether group     │
│ distribution is      │                    ╭─────────────────╮
│ triggered?           │───────────────────▶│ 2. starting group│
│                      │                    │ distribution    │
└──────────────────────┘                    ╰─────────────────╯
                                                     │
                                                     ▼
┌────────────────────────────────────────────────────────────────────┐
│ 3. initializing group distribution information on a power           │
│ distribution unit (PDU) inside a the charging module; wherein a     │
│ bus sharing charging module and the PDU on a system are both        │
│ deemed as an identical group;                                       │
└────────────────────────────────────────────────────────────────────┘
                                   │
                                   ▼
┌────────────────────────────────────────────────────────────────────┐
│ 4. executing an address sequencing command by all charging modules; │
│ uploading a complete symbol to a charging control unit CCU after    │
│ completing                                                          │
└────────────────────────────────────────────────────────────────────┘
                                   │
                                   ▼
┌────────────────────────────────────────────────────────────────────┐
│ 4. whether the CCU sends a group distribution command to the PDU    │
└────────────────────────────────────────────────────────────────────┘
         ◀─── NO ───
                                   │
                                  Yes
                                   ▼
┌────────────────────────────────────────────────────────────────────┐
│ 6. receiving and analyzing a group distribution data frame of the   │
│ PDU, and modifying group distribution information in current        │
│ sharing frames to be sent;                                          │
└────────────────────────────────────────────────────────────────────┘
                                   │
                                   ▼
┌────────────────────────────────────────────────────────────────────┐
│ 7. sending and broadcasting the current sharing frames by each one  │
│ of all the charging modules; filtering out-group current sharing    │
│ data according to the group distribution information in the current │
│ sharing frames; refreshing a new charging module address table in   │
│ groups to obtain address numbers of each group of main charging     │
│ modules;                                                            │
└────────────────────────────────────────────────────────────────────┘
                                   │
                                   ▼
┌────────────────────────────────────────────────────────────────────┐
│ 8. refreshing a group distribution status symbol of current share   │
│ regulating frame each group of the charging modules to be OK;       │
│ refreshing a group distribution status of the data frame to be OK   │
│ after received by the charging modules, terminating group           │
│ distribution                                                        │
└────────────────────────────────────────────────────────────────────┘
                                   │
                                   ▼
┌────────────────────────────────────────────────────────────────────┐
│ 9. inquiring group distribution status of the PDU uploaded via each │
│ group of the charging modules by a CCU; wherein if the group        │
│ distribution status is in accordance with a group distribution      │
│ object of the PDC, the CCU allows each specific charging group to    │
│ start up to work                                                    │
└────────────────────────────────────────────────────────────────────┘
                                   │
                                   ▼
┌────────────────────────────────────────────────────────────────────┐
│ 10. regularly sending the current share regulating frame by each    │
│ group of the main charging modules, and emptying current sharing    │
│ data information in a present group;                                │
└────────────────────────────────────────────────────────────────────┘
                                   │
                                   ▼
┌────────────────────────────────────────────────────────────────────┐
│ 11. refreshing current sharing data of a corresponding charging     │
│ module; wherein out charging -module current sharing data which is  │
│ filtered stays out of current sharing in a current group           │
└────────────────────────────────────────────────────────────────────┘
                                   │
                                   ▼
                          ╭─────────────────╮
                          │ 12. terminating │
                          │ group           │
                          │ distribution    │
                          ╰─────────────────╯
```

# Fig. 1

1. starting within-group current sharing

↓

No ⎡ 2. whether allows current sharing and press regulating

Yes ↓

3. whether the charging modules is in a boost status ——No——

Yes ↓

4. outputting a step of pressure regulating with a size of $d_1$

5. whether all the modules is in a decompression status ——No——

Yes ↓

6. outputting a step of pressure regulating with a size of $d_1$

7. whether pressure regulating of charging module is in an auto status ⊢No⊣

Yes ↓

8. outputting a step size $d_3$ of press regulating

9. outputting a clipping step size of press regulating

↓

10. terminating the current sharing in the groups

# Fig. 2

<table>
<tr><td colspan="2" align="center">**INTERNATIONAL SEARCH REPORT**</td><td>International application No.<br><br>**PCT/CN2016/096810**</td></tr>
</table>

**A. CLASSIFICATION OF SUBJECT MATTER**

H02J 7/00 (2006.01) i

According to International Patent Classification (IPC) or to both national classification and IPC

**B. FIELDS SEARCHED**

Minimum documentation searched (classification system followed by classification symbols)

H02J

Documentation searched other than minimum documentation to the extent that such documents are included in the fields searched

Electronic data base consulted during the international search (name of data base and, where practicable, search terms used)

CNPAT, WPI, EPODOC, CNKI, IEEE: flexible, current sharing, equilibrium, sort, address, configuration, share, bus, charge, group, match, differ, operation, filter, module, frame

**C. DOCUMENTS CONSIDERED TO BE RELEVANT**

| Category* | Citation of document, with indication, where appropriate, of the relevant passages | Relevant to claim No. |
|---|---|---|
| PX | CN 105207298 A (XI'AN TGOOD INTELLIGENT CHARGING TECHNOLOGY CO., LTD.), 30 December 2015 (30.12.2015), claims 1-9 | 1-9 |
| A | US 2015078553 A1 (LENOVO SINGAPORE PTE LTD.), 19 March 2015 (19.03.2015), description, paragraphs 10-24, and figures 1-3 | 1-9 |
| A | CN 102290844 A (BEIJING UNIVERSITY OF AERONAUTICS AND ASTRONAUTICS), 21 December 2011 (21.12.2011), the whole document | 1-9 |
| A | CN 201219203 Y (HEFEI TONGZHI SCIENCE AND TECHNOLOGY DEVELOPING CO., LTD.), 08 April 2009 (08.04.2009), the whole document | 1-9 |
| A | EP 2921699 A1 (GENERAL ELECTRIC COMPANY SCHENECTADY), 23 September 2015 (23.09.2015), the whole document | 1-9 |
| A | WO 2015020987 A1 (ENERGOUS CORPORATION), 12 February 2015 (12.02.2015), the whole document | 1-9 |

☐ Further documents are listed in the continuation of Box C.     ☒ See patent family annex.

| | | |
|---|---|---|
| *   Special categories of cited documents: | "T" | later document published after the international filing date or priority date and not in conflict with the application but cited to understand the principle or theory underlying the invention |
| "A"  document defining the general state of the art which is not considered to be of particular relevance | | |
| "E"  earlier application or patent but published on or after the international filing date | "X" | document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O"  document referring to an oral disclosure, use, exhibition or other means | | |
| "P"  document published prior to the international filing date but later than the priority date claimed | "&" | document member of the same patent family |

| Date of the actual completion of the international search | Date of mailing of the international search report |
|---|---|
| 01 November 2016 (01.11.2016) | **22 December 2016 (22.12.2016)** |

| Name and mailing address of the ISA/CN:<br> State Intellectual Property Office of the P. R. China<br> No. 6, Xitucheng Road, Jimenqiao<br> Haidian District, Beijing 100088, China<br>Facsimile No.: (86-10) 62019451 | Authorized officer<br><br>**CAO, Zhiming**<br><br>Telephone No.: (86-10) **62412307** |
|---|---|

Form PCT/ISA/210 (second sheet) (July 2009)

## INTERNATIONAL SEARCH REPORT
### Information on patent family members

International application No.

**PCT/CN2016/096810**

| Patent Documents referred in the Report | Publication Date | Patent Family | Publication Date |
|---|---|---|---|
| CN 105207298 A | 30 December 2015 | None | |
| US 2015078553 A1 | 19 March 2015 | US 8898461 B2 | 25 November 2014 |
| | | US 2012223671 A1 | 06 September 2012 |
| CN 102290844 A | 21 December 2011 | CN 102290844 B | 18 September 2013 |
| CN 201219203 Y | 08 April 2009 | None | |
| EP 2921699 A1 | 23 September 2015 | BR 102015005897 A2 | 24 May 2016 |
| | | US 2015267683 A1 | 24 September 2015 |
| | | CA 2883814 A1 | 18 September 2015 |
| | | US 9453497 B2 | 27 September 2016 |
| WO 2015020987 A1 | 12 February 2015 | US 2015042264 A1 | 12 February 2015 |

Form PCT/ISA/210 (patent family annex) (July 2009)